Europäisches Patentamt

European Patent Office

Office européen des brevets

(19)

(11) Veröffentlichungsnummer: **0 331 097**
**B1**

(12) # EUROPÄISCHE PATENTSCHRIFT

(45) Veröffentlichungstag der Patentschrift:
14.11.90

(51) Int. Cl.⁵: **F16D 3/06, F16D 3/26**

(21) Anmeldenummer: 89103463.9

(22) Anmeldetag: 28.02.89

(54) **Kraftübertragungsgelenk.**

(30) Priorität: 01.03.88 DE 3806522

(43) Veröffentlichungstag der Anmeldung:
06.09.89 Patentblatt 89/36

(45) Bekanntmachung des Hinweises auf die Patenterteilung:
14.11.90 Patentblatt 90/46

(84) Benannte Vertragsstaaten:
DE FR GB IT SE

(56) Entgegenhaltungen:
EP-A- 148 682
DE-C- 406 988
GB-A- 971 094
US-A- 2 681 552

(73) Patentinhaber: DIEHL GMBH & CO., Stephanstrasse 49,
D-8500 Nürnberg(DE)

(72) Erfinder: Engel, Michael, Eichenwiese 29,
D-5541 Neuendorf(DE)
Erfinder: Pepping, Karl-Heinz, Egelstrasse 3,
D-5372 Schleiden(DE)
Erfinder: Gebhardt, Günther, Am Hasenberg 5,
D-5536 Stadtkyll(DE)

## Beschreibung

Die Erfindung bezieht sich auf ein Kraftübertragungsgelenk zum Einfügen zwischen einer Antriebs- und einer Abtriebswelle nach dem Oberbegriff des Anspruches 1.

Aus der DE-B 2 640 344 ist ein elastisches Kraftübertragungsgelenk bei einer Lenksäule eines Kraftfahrzeuges bekannt. Bei einem Unfall werden durch das Kraftübertragungsgelenk axiale Stösse zum Schutze des Fahrzeuglenkers absorbiert. Hierzu sind Lagerschalen mit elastischen Blöcken für einen Gelenkzapfen vorgesehen. Die Lagerschalen sind so geformt, daß sie einen gewissen Hub des Gelenkzapfens bei Deformation der elastischen Blöcke ermöglichen. Im Normalbetrieb liegt jedoch kein nennenswertes Spiel in Richtung der Antriebs- und Abtriebswelle vor. Deshalb eignet sich dieses Kraftübertragungsgelenk nicht für das Schaltgestänge eines Kraftfahrzeug-Getriebes. Denn beim Schalten eines Kraftfahrzeuggetriebes sind am Schalthebel Kraftspitzen fühlbar, die den Schaltvorgang unkomfortabel machen, weil Kraftimpulse aus dem Getriebe nahezu ungedämpft zum Schalthebel gelangen.

Der Erfindung liegt daher die Aufgabe zugrunde, das sogenannte äußere und innere Schaltungssystem derart voneinander abzukoppeln, daß während des Schaltvorganges am Schalthebel keine ruckartigen Kraftspitzen spürbar sind.

Die Erfindung löst diese Aufgabe entsprechend den kennzeichnenden Merkmalen des Anspruches 1.

Vorteilhafte Weiterbildungen der Erfindung sind den Unteransprüchen zu entnehmen.

Ein Ausführungsbeispiel der Erfindung sowie deren Vorteile sind der nachfolgenden Beschreibung zu entnehmen.
Es zeigen:

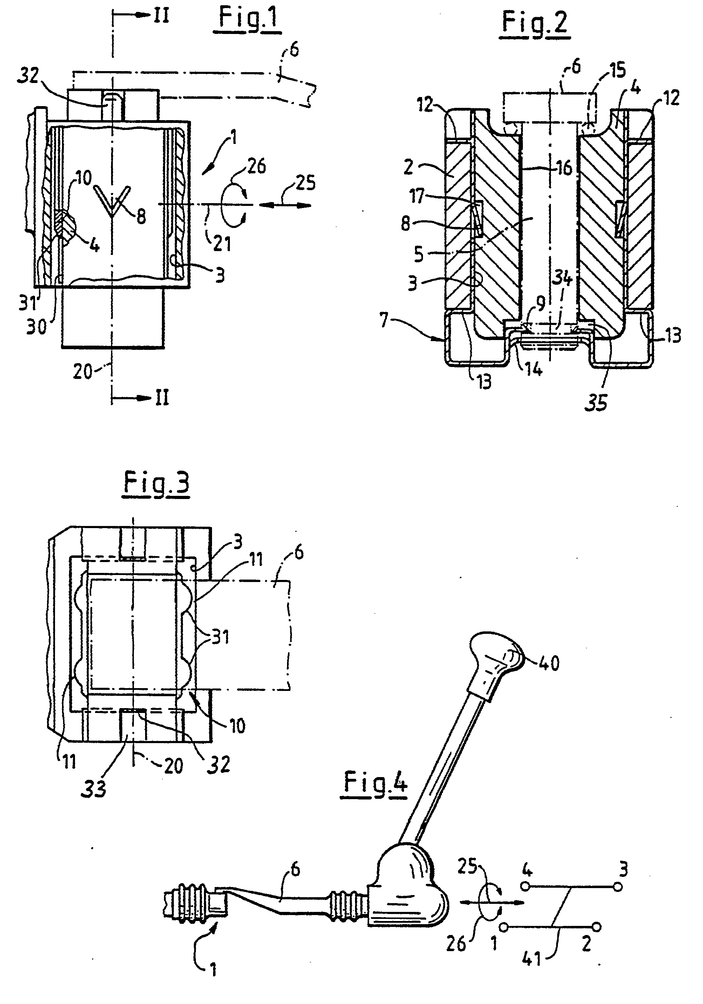

Fig. 1 bis 3 ein Kraftübertragungsgelenk in verschiedenen Ansichten und Schnitten;
Fig. 4 das Schaltgestänge eines Kraftfahrzeuggetriebes mit dem Kraftübertragungsgelenk nach den Figuren 1 bis 3.

Das Kraftübertragungsgelenk 1 besteht aus einem Kreuzgelenkkäfig 2 mit einer rechtwinkligen Ausnehmung 3, einem Kulissenstein 4 mit strichpunktiert gezeichnetem Zapfen 5 und Schaltstange 6, einem Federstahlblech 7 mit Rastzungen 8 und 9 und einem gummielastischen Dämpfer 10.

Der Kulissenstein 4 ist im Kreuzgelenkkäfig 2 wie folgt gelagert:
In der Schwenkebene 20 um die Achse 21 durch das Federstahlblech 7 nahezu spielfrei.
In den Schubrichtungen in der Achse 21 entsprechend dem Pfeil 25 ebenfalls durch die Stahlfeder 7, jedoch mit freien Wegstrecken 11 bezüglich der Ausnehmung 3.

Das Federstahlblech 7 ist über Winkel 12 und 13 formschlüssig mit dem Kreuzgelenkkäfig 2 und über die Rastzungen 8 und die Ausnehmung 17 sowie über abgewinkelte Stege 14 in der Senkung 35 und mit den Zungen 32 in den Nuten 33 formschlüssig mit dem Kulissenstein 4 verbunden. Der Zapfen 5 wird in der Bohrung 16 des Kulissensteins 4 über die Rastzungen 9 in der Nut 34 fixiert. Ein Dichtring 15 ist am Zapfen 5 angeordnet.

Die Dämpfer 10 sind beidseitig mit dem Kulissenstein 4 durch Vulkanisation verbunden. Sie bestehen aus einer Grundplatte 30 mit jeweils zwei Rippen 31.

Zur Funktion:
Nach Fig. 4 wird ein Schalthebel 40 entsprechend einem Schaltschema 41 betätigt.
Das Kraftübertragungsgelenk 1 besitzt in Schaltrichtung 25 die progressiv wirkenden Dämpfer 10, die auf Zug und auf Druck die Schaltspitzen aus einem nicht gezeichneten Getriebe abschwächen. Daneben weist es einen definierten Freigang entsprechend den freien Wegstrecken 11 auf. Dadurch wird ein ruckartiges Einrasten von Getriebeelementen soweit abgeschwächt, daß diese Effekte am Schalthebel 40 nicht spürbar sind.
In Wählrichtung, siehe Pfeil 26, sind keine Federelemente bzw. elastischen Dämpfer eingebaut, so daß ein präzises Wählgefühl gewährleistet ist.

## Patentansprüche

1. Kraftübertragungsgelenk zum Einfügen zwischen einer Antriebs- und einer Abtriebswelle, bestehend aus einem Kreuzgelenkkäfig, einem darin fixierten Kulissenstein zur Aufnahme eines Gelenkzapfens und elastischen Elementen, dadurch gekennzeichnet, daß der Kreuzgelenkkäfig (2) eine rechtwinklige Ausnehmung (3) aufweist, der Kulissenstein (4) entsprechend der Ausnehmung (3) quaderförmig ausgebildet und umfangsseitig bzw. seitlich durch ein Halteglied (7) nur in der Schwenkebene (20) um die Achse (21) spielfrei gehalten ist, während in Längsrichtung (21) bzw. in Schubrichtung (25) für den Kulissenstein (4) freie Wegstrecken (11) für einen definierten Freigang und gummielastische Dämpfer (10) vorgesehen sind.

2. Kraftübertragungsgelenk nach Anspruch 1, dadurch gekennzeichnet, daß das Halteglied aus einem Federstahlblech (7) besteht, das über Winkel (12,13) in der Schwenkebene (20) formschlüssig am Kreuzgelenkkäfig (2) gehalten ist und in Schubrichtung (25) ein Gleiten zwischen Federstahlblech (7) und Kreuzgelenkkäfig (2) erlaubt.

3. Kraftübertragungsgelenk nach den Ansprüchen 1 und 2, dadurch gekennzeichnet, daß der Kulissenstein (4) formschlüssig mit dem Federstahlblech (7) über die federnden Rastzungen (8), die in entsprechende Ausnehmungen (17) einrasten, verbunden ist, und daß zur weiteren Fixierung des Kulissensteines (4) die Stege (32) und (14), die in entsprechenden Aussparungen (33) und (35) formschlüssig gehalten sind, dienen.

4. Kraftübertragungsgelenk nach Anspruch .1, dadurch gekennzeichnet, daß der Dämpfer (10) aus einer Grundplatte (30) mit Rippen (31) besteht, und der Dämpfer (10) mit dem Kulissenstein (4) fest verbunden ist.

5. Kraftübertragungsgelenk nach Anspruch 4, dadurch gekennzeichnet, daß die Rippen (31) aus der Grundplatte herausragen und ein etwa halbkreisförmiges Profil aufweisen.

## Claims

1. A force-transfer link for insertion between a driving shaft and a driven shaft, comprising a knucklejoint cage, a sliding block fixed therein for the reception of a link pin, and elastic elements, characterised in that the knuckle-joint cage (2) has a rectangular recess (3), the sliding block (4) in accordance with the recess (3) is parallelepidic in design and is held peripherally or respectively laterally by a retaining member (7) in a playfree manner only in the swivel plane (20) about the axis (21), whilst in the longitudinal direction (21) or respectively in the thrust direction (25) free lengths of path (11) for a defined free-movement and rubber-elastic dampers (10) are provided for the sliding block (4).

2. A force transfer link according to claim 1, characterised in that the retaining member consists of a spring-steel sheet (7), which is held by way of angles (12, 13) in the swivel plane (20) in a form-locking manner on the knuckle-joint cage (2) and in the thrust direction (25) allows a sliding between spring-steel sheet (7) and knuckle-joint cage (2).

3. A force transfer link according to claims 1 and 2, characterised in that the sliding block (4) is connected in a form-locking manner to the spring-steel sheet (7) by way of the resilient detent tongues (8) which engage into corresponding recesses (17), and in that the webs (32) and (14), which are held in a form-locking manner in corresponding cutouts (33) and (35), serve for the further location of the sliding block (4).

4. A force transfer link according to claim 1, characterised in that the damper (10) consists of a base plate (30) having ribs (31), and the damper (10) is connected securely to the sliding block (4).

5. A force transfer link according to claim 4, characterised in that the ribs (31) protrude from the base plate and have an approximately semicircular profile.

## Revendications

1. Mécanisme articulé de transmission, à introduire entre un arbre d'entraînement et un arbre entraîné, se composant d'une cage de joint de cardan, d'un coulisseau fixé à l'intérieur en vue de recevoir un tourillon articulé et des organes élastiques, caractérisé en ce que la cage de joint de cardan (2) présente un évidement (3) rectangulaire, le coulisseau (4) étant réalisé d'une manière parallélépipédique correspondant à l'évidement (3) et étant maintenu du côté de la périphérie ou latéralement au moyen d'un organe de maintien (7), en étant uniquement sans jeu dans le plan de pivotement (20) autour de l'axe (21), alors que des parcours (11) libres sont prévus pour un libre déplacement défini du coulisseau (4) en direction longitudinale (21) ou en direction de poussée (25), ainsi que des amortisseurs (10) élastiques.

2. Mécanisme articulé de transmission selon la revendication 1, caractérisé en ce que l'organe de maintien se compose d'une tôle d'acier à ressort (7) qui est maintenu dans le plan de pivotement (20), par complémentarité de forme, sur la cage de joint de cardan (2), par l'intermédiaire de cornières (12, 13) et qui permet, dans le sens de la poussée (25), un coulissement entre tôle d'acier à ressort (7) et cage de joint de cardan (2).

3. Mécanisme articulé de transmission selon les revendications 1 et 2, caractérisé en ce que le coulisseau (4) est relié par complémentarité de forme à la tôle d'acier à ressort (7), par l'intermédiaire des languettes d'encliquetage élastiques (8) qui s'encliquètent dans des évidements correspondants (17), et que les nervures (32) et (14), qui sont maintenues par complémentarité de forme dans des évidements (33) et (35), servent à assurer une fixation supplémentaire du coulisseau (4).

4. Mécanisme articulé de transmission selon la revendication 1, caractérisé en ce que l'amortisseur (10) se compose d'une plaque de base (30) comportant des nervures (31), et qu'il est relié fermement au coulisseau (4).

5. Mécanisme articulé de transmission selon la revendication 4, caractérisé en ce que les nervures (31) sortent de la plaque de base et présentent un profil en forme de demi-cercle.

Fig.1

Fig.2

Fig.3

Fig.4